# EUROPÄISCHE PATENTSCHRIFT

(11) **EP 3 138 735 B1**
(45) Veröffentlichungstag und Bekanntmachung des Hinweises auf die Patenterteilung: **16.02.2022**
(21) Anmeldenummer: 16182301.8
(22) Anmeldetag: 02.08.2016
(51) Int. Cl.: B60Q 1/26, G02B 6/00, F21V 8/00, B60R 1/12, F21S 43/14, F21S 43/239, F21S 43/245, F21S 43/249, F21S 43/27, F21S 45/10, F21S 43/19, F21S 45/47

(54) **AUSSENSPIEGEL FÜR EIN KRAFTFAHRZEUG**
EXTERNAL MIRROR FOR A MOTOR VEHICLE
RETROVISEUR EXTERIEUR DE VEHICULE AUTOMOBILE

(30) Priorität: 01.09.2015 DE 102015216675; 10.05.2016 DE 102016207964
(43) Veröffentlichungstag der Anmeldung: 08.03.2017
(73) Patentinhaber: Volkswagen Aktiengesellschaft, 38440 Wolfsburg (DE)
(72) Erfinder: Geyer, Christoph, 38547 Wettmershagen (DE); Pietruschka, Georg-Anton, 38440 Wolfsburg (DE)

(56) Entgegenhaltungen:
- EP-A1- 2 530 372
- DE-A1-102004 015 544
- DE-A1-102005 044 447
- DE-A1-102011 103 200
- DE-A1-102012 104 529
- DE-A1-102012 211 822
- DE-U1- 20 220 246
- DE-U1-202013 011 117

## Beschreibung

Die Erfindung betrifft einen Außenspiegel für ein Kraftfahrzeug mit den Merkmalen vom Oberbegriff des Patentanspruchs 1.

Ein derartiger Außenspiegel ist aus der DE 20 2013 011 117 U1 bekannt. Konkret beinhaltet der dort offenbarte Außenspiegel ein Gehäuse mit einem Schlitz an seiner Außenseite sowie ein Montageloch in einer Endfläche des Schlitzes. Ferner ist eine Lichtröhre vorhanden, welche einen Silikonschlauch aufweist, in dem zwei Leuchtdiodenreihen mit mehreren Leuchtdioden aufgenommen sind. Aufgrund der Flexibilität der Lichtröhre kann diese, der Form des Gehäuses folgend, im Schlitz montiert werden. Ein transparentes Abdeckelement dient zur Abdeckung einer Lichtaustrittsfläche der Lichtröhre und wird über Positionierelemente im Gehäuse eingerastet.

Aus der DE 10 2005 044447 A1 ist ebenfalls ein Außenspiegel bekannt. Dieser weist einen Spiegelkopf auf, in dessen Gehäuse eine schlitzförmige Öffnung eingebracht ist. Die Öffnung bildet eine Einbauöffnung für eine Leuchte mit einem länglichen, gekrümmten Lichtleiter, dessen Außenseite bündig mit dem Gehäuse des Spiegelkopfes abschließt.

Die DE 10 2012 211 822 A1 beschreibt ein Rückspiegel-Gehäuseelement mit einer Gehauseschale. Die Gehäuseschale ist einstückig mit einem Lichtleitmittel verbunden, welches in einem lichtdurchlässigen Bereich der Gehäuseschale angeordnet ist. Die Gehäuseschale ist mit Ausnahme des lichtdurchlässigen Bereichs mit einer Lackschicht versehen. Über der Lackschicht und dem lichtdurchlässigen Bereich ist wiederum eine schützende Klarlackschicht aufgebracht. Die Rückseite des Lichtleitmittels ist mit einer Auskoppelstruktur und einer diese überdeckenden, reflektierenden Beschichtung versehen.

Der DE 10 2012 104 529 A1 ist eine Lichtleiteinheit für eine Beleuchtungseinrichtung, bspw. für einen Außenspiegel zu entnehmen. Die Lichtleiteinheit weist einen Lichtleitkörper auf, der an seinen Oberflächen entlang der Lichtleitrichtung mit einem optisch wirksamen Element in Form einer lichtundurchlässigen Lackschicht oder Metallisierung ummantelt ist. Das Element ist zusätzlich mit einem Abdeckmittel abgedeckt, welches auch als Dichtelement ausgebildet sein kann.

Ein Außenspiegel ist auch in der DE 297 02 746 U1 beschrieben. Konkret weist der Außenspiegel eine Öffnung auf, welche horizontal ausgerichtet ist und sich nahezu über die gesamte Länge des Außenspiegels erstreckt. In die Öffnung ist ein Lichtleiter eingelassen, in den spiegelfußseitig über lichtemittierende Dioden Licht eingekoppelt wird. Der Lichtleiter ist über ein Halterungsteil lösbar im Außenspiegel-Gehäuse befestigt.

Trotz des den Lichtleiter zu einem großen Teil umgebenden Außenspiegel-Gehäuses ist dieser jedoch erhöht Umwelteinflüssen ausgesetzt. Dies führt mit der Zeit dazu, dass die Oberfläche des Lichtleiters verunreinigt und/oder stellenweise beschädigt wird. Auf diese Weise entstehen ungewollte Lichtauskoppelbereiche, so dass optische Eigenschaften des Lichtleiters mit der Zeit beeinträchtigt werden können.

In der DE 10 2010 061 210 A1 wird eine Heckleuchte für Kraftfahrzeuge beschrieben. Bei der beschriebenen Heckleuchte kommt ein scheibenförmiger Lichtleiter zum Einsatz. Durch Primär-Lichtquellen in Form von lichtemittierenden Dioden wird quer zu einer Licht-Hauptabstrahlrichtung Licht in den Lichtleiter eingekoppelt und in der Licht-Hauptabstrahlrichtung wieder aus diesem ausgekoppelt. Über eine als Glühlampe ausgebildete Sekundärlichtquelle wird von der Rückseite des Lichtleiters über einen Reflektor Licht in Hauptabstrahlrichtung ausgestrahlt. Somit können mit der Heckleuchte mehrere Lichtfunktionen, wie beispielsweise Bremslicht und Blinklicht, überlagert werden. Der Lichtleiter ist mit seiner Flächenerstreckung horizontal ausgerichtet und an seiner vorderen Schmalseite mit einer Streuoptik versehen. Auch die der Sekundärlichtquelle zugewandte Rückseite des Lichtleiters kann mit stufenförmigen oder prismatischen Optikelementen ausgestattet sein.

Aus der DE 10 2012 111 276 A1 ist eine Heckleuchte für ein Kraftfahrzeug bekannt, bei der ein Lichtleiter in einem lichtdurchlässigen Gehäuse angeordnet ist.

Die dem Lichtleiter zugewandte Innenfläche einer Lichtscheibe ist bereichsweise mit einer lichtundurchlässigen Beschichtung versehen. Über einen freigelaserten Bereich der lichtundurchlässigen Beschichtung kann das Licht des Lichtleiters aus der Heckleuchte nach außen austreten.

In dem allgemeinen, der Anmelderin bekannten Stand der Technik, wird ein Lichtleiter zum besseren Schutz komplett von einem transparenten Kunststoffgehäuse umgeben und zusammen mit diesem in einem Außenspiegel-Gehäuse verbaut. Bedingt durch das den Lichtleiter komplett umgebende Gehäuse, entsteht jedoch ein hoher Bauraumbedarf.

Der vorliegenden Erfindung liegt die Aufgabe zu Grunde, einen Außenspiegel für ein Kraftfahrzeug bereitzustellen, bei dem der Bauraumbedarf reduziert ist. Zudem soll dessen Lichtleiter und eine diesen abdeckende Abdeckung gut geschützt und eine hohe Lichtausbeute erzielbar sein.

Vorliegende Aufgabe wird mit den Merkmalen von Patentanspruch 1 gelöst.

Vorteilhafte Ausbildungen beziehungsweise Weiterbildungen der Erfindung sind den abhängigen Ansprüchen zu entnehmen.

Die Erfindung geht von einem Außenspiegel für ein Kraftfahrzeug aus, mit wenigstens einem Lichtleiter, in den das Licht wenigstens einer Lichtquelle einkoppelbar ist. Zur Realisierung wenigstens einer Lichtfunktion ist das eingekoppelte Licht über wenigstens eine als Lichtaustrittsfläche wirkende Seite des Lichtleiters wieder auskoppelbar. Dabei tritt das Licht durch wenigstens eine Öffnung eines Außenspiegel-Gehäuses aus dem Außenspiegel nach außen aus.

Die wenigstens eine Lichtfunktion kann beispielsweise ein Fahrtrichtungsanzeiger (Blinklicht) und/oder auch ein Tagfahrlicht sein.

Ein Merkmal der Erfindung besteht darin, dass der Lichtleiter nahezu vollständig mit wenigstens einer Beschichtung überzogen ist.

Durch die Beschichtung des Lichtleiters kann nun auf ein den Lichtleiter umgebendes und schützendes Gehäuse verzichtet werden. Der Lichtleiter kann, lediglich mit der Beschichtung versehen, im Außenspiegel-Gehäuse montiert werden. Dies führt zu deutlichen Bauraumeinsparungen. Überdies kann dadurch auch die Teilanzahl geringgehalten werden. Des Weiteren werden dadurch die Voraussetzungen dafür geschaffen, dass die Öffnung im Außenspiegel-Gehäuse, aus der das in den Lichtleiter eingekoppelte Licht nach außen tritt, schlitzartig ausgebildet sein kann.

Gemäß einem weiteren Merkmal der Erfindung ist die Beschichtung transparent.

Es hat sich überraschenderweise herausgestellt, dass mit einer transparenten Beschichtung einerseits ein guter Schutz und andrerseits hohe Reflexionswerte und damit eine hohe Lichtausbeute des in den Lichtleiter eingekoppelten Lichts erzielt werden können. Überdies wird hierdurch die Herstellung des Außenspiegels erleichtert. Eine Maskierung der Vorderseite vor Aufbringung der Beschichtung oder eine nachträgliche Entfernung der aufgebrachten Beschichtung von einer als Lichtaustrittsseite fungierenden Seite des Lichtleiters kann unterbleiben.

Dabei hat es sich als besonders vorteilhaft erwiesen, als Beschichtung einen transparenten Lack zu verwenden. Transparente Lacke sind äußerst widerstandsfähig. Außerdem hat es sich überraschenderweise gezeigt, dass mit einer transparenten Beschichtung ein hoher Reflexionsgrad und damit eine sehr gute Lichtausbeute (Verhältnis von ausgekoppeltem zu eingekoppeltem Licht) erzielt werden konnte.

Gemäß einer anderen Ausbildung des Erfindungsgedankens ist der Lichtleiter mit einer Flächenerstreckung plattenartig und im Umriss sensenartig ausgebildet, mit einer vorderen, einer Fahrtrichtung zugewandten Seite, einer hinteren, der Fahrtrichtung abgewandten Seite, einer oberen Seite und einer unteren Seite.

Diese Ausbildung trägt dazu bei, die Öffnung im Außenspiegel schlitzartig ausbilden zu können, was zu einem außergewöhnlichen Erscheinungsbild des Außenspiegels führt.

Überdies ermöglicht die sensenartige Ausbildung auch eine leichte, seitliche Lichteinkopplung in den Lichtleiter auf einer seitlichen Seite, wobei Lichtstrahlen zum Teil bis zu einem spitzen Ende des Lichtleiters geleitet und dort entgegen einer Fahrtrichtung ausgekoppelt werden können.

Um den Schutz des Lichtleiters optimieren zu können, wird vorgeschlagen, die als Lichtaustrittsfläche wirkende Seite des Lichtleiters mit einem transparenten Abdeckelement abzudecken.

Bei Verwendung eines solchen Abdeckelementes ist zwischen der als Lichtaustrittsfläche wirkenden Seite des Lichtleiters und dem Abdeckelement zumindest bereichsweise einen Abstand ausgebildet. Dies verbessert die lichttechnischen Eigenschaften der lichtleitenden Anordnung. Insbesondere kann dadurch eine sehr homogene Lichtabstrahlung erzielt werden.

Zu einer Homogenisierung der Lichtabstrahlung trägt es ebenfalls bei, wenn gemäß einer anderen Weiterbildung eine Oberfläche des Abdeckelementes, welche der als Lichtaustrittsfläche wirkenden Seite des Lichtleiters zugewandt ist, zumindest bereichsweise mattiert ist. Dabei kann die einem Betrachter zugewandte Oberfläche des Abdeckelementes glatt und unversehrt verbleiben, was den optischen Gesamteindruck des Außenspiegels verbessert. Die Mattierung, also Aufrauhung kann beispielsweise durch ein Ätzverfahren oder auch durch Sandstrahlung erfolgen. Die Mattierung wird jedoch vorzugsweise bereits werkzeugseitig, d.h. durch entsprechende Oberflächengestaltung des Werkzeugs, beim Spritzgießprozess des Abdeckelementes in dieses eingebracht.

In weiterer zweckmäßiger Ausgestaltung ist eine hintere, einer Fahrtrichtung abgewandte Seite des Lichtleiters mit einer Streuoptik versehen. Durch die Streuoptik können auf die hintere, der Fahrtrichtung abgewandten Seite fallende Lichtstrahlen optimal zur Lichtaustrittsfläche gelenkt werden. Die Streuoptik kann beispielsweise als Kissen- oder Streifenoptik ausgebildet sein.

Die Erfindung kann auch dadurch weitergebildet werden, dass in einem Abstand von der vorderen Seite lichtlenkende Störstellen in den Lichtleiter eingebracht sind.

Auf diese Weise können durch die Streuoptik der hinteren Seite gestreute Lichtstrahlen ein zweites Mal gebrochen und gestreut werden, was zu einer weiteren lichttechnischen Verbesserung beiträgt. Durch den Abstand von der vorderen Seite kann trotz der Störstellen die Oberfläche der als Lichtaustrittsfläche wirkenden, vorderen Seite des Lichtleiters unversehrt bleiben. Die Störstellen müssen dabei nicht alle in einem gleichen Abstand von der vorderen Seite angeordnet sein. Sie können bevorzugt zumindest zum Teil unterschiedliche Abstände von der vorderen Seite aufweisen. Hierdurch wird der Streueffekt durch die Störstellen noch verbessert.

Die Störstellen können bevorzugt bereits bei der Herstellung des Lichtleiters in diesen eingebracht werden. Der Lichtleiter ist aus Kunststoff (bevorzugt Polymethylmethacrylat = PMMA oder Polycarbonat = PC) und wird durch Spritzgießen hergestellt. Beim Spritzgussvorgang werden Erhebungen in den Werkzeughälften umspritzt und als Störstellen in der oberen und/oder in der unteren Seite des Lichtleiters abgebildet. Die Erhebungen können beispielsweise pyramidenartig sein. Auf der Seite des Lichtleiters ergeben sich dann entsprechend pyramidenartige Vertiefungen, die beim Beschichten des Lichtleiters auch mit der oder den beschriebenen Beschichtungen ausgefüllt werden.

Die Störstellen können aber auch mittels eines Lasers in einem dreidimensionalen Verfahren erzeugt und somit als Lasergravuren unter der Oberfläche des Lichtleiters ausgebildet sein. Die Lasergravuren können beliebige Formen und Ausrichtung aufweisen. Sie können beispielsweise strichartig ausgebildet sein.

Eine höchst prägnante, vom Außenspiegel ausgehende Signalwirkung kann dann erzielt werden, wenn die Öffnung des Außenspiegel-Gehäuses schlitzartig ausgebildet ist, wobei die Flächenerstreckung des Lichtleiters in Montageposition in etwa horizontal ausgerichtet ist und der Lichtleiter vorderseitig oder mit einem Vorsprung des Abdeckelementes in der Öffnung aufgenommen ist. Die schlitzartige Ausbildung ergibt sich insbesondere dann, wenn die Länge der in etwa horizontal ausgerichteten Öffnung um ein Vielfaches länger ist, als deren Höhe senkrecht zur Länge. Das Verhältnis "Länge zur Höhe" liegt bevorzugt in einem Bereich von in etwa 40 bis 60, besonders bevorzugt in einem Bereich von etwa 45 bis 55. Ganz besonders bevorzugt beträgt das Verhältnis "Länge zur Höhe" in etwa 52.

Schließlich sieht eine andere Ausbildung des Erfindungsgedankens noch vor, dass der Lichtleiter rückseitig, also entgegen seiner Abstrahlrichtung, von einer Längsnut einer länglichen Halterung teilweise aufgenommen ist und im Außenspiegel-Gehäuse horizontal ausgerichtete Vorsprünge angeordnet sind, welche in ober- und unterhalb der Längsnut befindliche Schlitze eingreifen.

Durch eine solche Halterung kann eine schwingungsfreie Positionierung des Lichtleiters in der Öffnung des Außenspiegel-Gehäuses erleichtert werden.

Die Erfindung betrifft aber auch ein Kraftfahrzeug, welches mit wenigstens einem erfindungsgemäßen Außenspiegel ausgestattet ist und für das ebenfalls Schutz begehrt wird.

Im Folgenden soll noch einmal ausführlich auf bevorzugt zu verwendende Materialien eingegangen werden:

So ist der Lichtleiter aus einer amorphen, thermoplastischen Kunststoff-Formmasse, bevorzugt Polymethylmethacrylat (PMMA) im Spritzgussverfahren hergestellt. Besonders bevorzugt wird ein Material für den Lichtleiter (im folgenden Material 1) gewählt, welches ein sehr gutes Lichtstreuvermögen bei hoher Lichtdurchlässigkeit aufweist, mit folgenden Kennwerten bzw. Kennwertbereichen:

| Kennwert | Einheit | Bevorzugter Bereich (besonders bevorzugter Kennwert), etwa |
|---|---|---|
| Zug-Modul (1mm/min, ISO 527) | MPa | 3200-3600 (3400) |
| Bruchspannung (5 mm/min, ISO 527) | MPa | 60-70 (65) |
| Bruchdehnung (5mm/min, ISO 527) | % | 2-3 (2,5) |
| Charpy Schlagzähigkeit (23°C, ISO 179/1eU) | kJ/m² | 15-19 (17) |
| Vicat Erweichungstemperatur (B / 50, ISO 306) | °C | 102-108 (105) |
| Glasübergangstemperatur (ISO 11357) | °C | 105-111 (108) |
| Formbeständigkeitstemperatur (0,45 MPa, ISO 75) | °C | 98-104 (101) |
| Formbeständigkeitstemperatur (1,8 MPa, ISO 75) | °C | 94-100 (97) |
| Längenausdehnungskoeffizient (0-50°, ISO 11359) | E-5/°K | 5,5-7,1 (6,3) |
| Schmelzvolumenrate MVR (230°C/3,8 Kg, ISO 1133) | cm³/10min | 3,6-4,6 (4,1) |
| Transmissionsgrad (D65, ISO 13468-2) | % | 75-87 (81) |
| Dichte | g/cm³ | 1,1-1,3 (1,19) |

Das Abdeckelement besteht aus einer Materialmischung, wobei zusätzlich zum Material 1 zweckmäßigerweise noch ein weiteres Material (im Folgenden Material 2) zum Einsatz kommt, welches sehr gute mechanische Eigenschaften, hohe Wärmeformbeständigkeit, gute Fließfähigkeit und Schmelzeviskosität aufweist. Hier haben sich folgende Kennwerte bzw. Kennwertbereiche als zweckmäßig erwiesen:

| Kennwert | Einheit | Bevorzugter Bereich (besonders bevorzugter Kennwert), etwa |
|---|---|---|
| Zug-Modul (1mm/min, ISO 527) | MPa | 3000-3400 (3200) |
| Bruchspannung (5 mm/min, ISO 527) | MPa | 68-78 (73) |
| Bruchdehnung (5mm/min, ISO 527) | % | 3-4 (3,5) |
| Charpy Schlagzähigkeit (23°C, ISO 179/1eU) | kJ/m² | 18-22 (20) |
| Vicat Erweichungstemperatur (B / 50, ISO 306) | °C | 100-106 (103) |
| Glasübergangstemperatur (ISO 11357) | °C | 107-113 (110) |
| Formbeständigkeitstemperatur (0,45 MPa, ISO 75) | °C | 97-103 (100) |
| Formbeständigkeitstemperatur (1,8 MPa, ISO 75) | °C | 92-98 (95) |
| Längenausdehnungskoeffizient (0-50°, ISO 11359) | E-5/°K | 7,2-8,8 (8) |
| Schmelzvolumenrate MVR (230°C/3,8 Kg, ISO 1133) | cm³/10min | 5,5-6,5 (6) |
| Transmissionsgrad (D65, ISO 13468-2) | % | 86-98 (92) |
| Brechungszahl (589nm/23°C, ISO 489) | | 1,3-1,7 (1,49) |
| Dichte | g/cm³ | 1,1-1,3 (1,19) |

Als Mischungsverhältnis der beiden Materialien hat sich ein Verhältnisbereich von 70% bis 80 % von Material 1 zu 30% bis 20 % von Material 2, besonders bevorzugt ein Mischungsverhältnis von 75 % des Materials 1 zu 25 % des Materials 2 bewährt (also Material 1: Material 2 = 3:1).

Beide Materialien liegen vor der Verarbeitung als amorphe, thermoplastische Kunststoff-Formmasse, insbesondere als Gleichkorngranulat vor.

Der erfindungsgemäße Außenspiegel kann höchst vorteilhaft durch ein Verfahren hergestellt werden, welches als aufeinander folgende und wesentlichen Verfahrensschritte für die zu bearbeitenden Bauteile (Lichtleiter und Abdeckelement) folgende Verfahrensschritte aufweist:
- Reinigung der zu fügenden Bauteile
- Auftragen eines Klebstoffes auf die zu fügenden Bauteile
- Fügen der Bauteile
- Aushärten der verklebten Bauteile
- Reinigung der aus den verklebten Bauteilen bestehenden Baueinheit
- Aufbringen wenigstens einer Beschichtung auf die Baueinheit
- Lufttrocknung
- Aushärtung

Vor Auftragen des Klebstoffs können die zu fügenden Bauteile mittels eines trockenen Poliertuchs, bei starker Verschmutzung auch mittels eines handelsüblichen Reinigungsbenzins gereinigt werden.

Vorteilhaft findet ein Reinigungsbenzin Verwendung, welches folgende Produktkennwerte aufweist:
Stoffname: Kohlenwasserstoffe, C6-C7, n-Alkane, iso-Alkane, cylische Verbindungen, <5% n-Hexan

Um das Fügen der Bauteile in der erforderlichen Genauigkeit durchführen zu können, wird das Fügen zweckmäßigerweise mittels einer geeigneten Lehre durchgeführt. In diese Lehre werden die zu verklebenden Bauteile eingespannt und dann definiert in Klebeposition geführt.

Der zuvor in einer Spritze bereitgestellte Klebstoff kann dabei höchst vorteilhaft mittels einer Dosiernadel (bspw. 0,5", Ø 0,33 mm) auf die Klebeflächen aufgetragen werden.

Die Aushärtung der verklebten Bauteile wird vorzugsweise über eine Dauer von wenigstens etwa 8 Stunden bei Raumtemperatur (18-22°C), besonders bevorzugt über eine Dauer von wenigstens etwa 10 Stunden durchgeführt. Die verklebten Bauteile verbleiben vorteilhaft für die Dauer der Aushärtung in der Lehre.

Vor Aufbringung der wenigstens einen Beschichtung kann die aus den verklebten Bauteilen bestehende Baueinheit mittels eines trockenen Poliertuchs, bei starker Verschmutzung auch mittels eines handelsüblichen Reinigungsbenzins gereinigt werden. Vorteilhaft kann das Reinigungsbenzin mit den oben genannten Produktkennwerten verwendet werden.

Das Beschichtungsmaterial wird zur Erfüllung hoher optischer Ansprüche vor der Verarbeitung im geschlossenen Originalgebinde auf Raumtemperatur erwärmt und dann filtriert, wobei vorzugsweise ein Vorfilter mit 3-5 µm und ein Feinfilter mit 0,5-1 µm zum Einsatz kommen.

Das Aufbringen der wenigstens einen Beschichtung kann vorzugsweise durch eine Sprühbeschichtung mittels einer geeigneten Spritzpistole erfolgen, da dadurch eine sehr genaue Beschichtung/Lackierung möglich ist. Vorzugsweise wird die Beschichtung auf dem Substrat in einer Schichtdicke von etwa 2-6 µm aufgetragen.

Eine Lufttrocknung der Beschichtung wird vorzugsweise für die Dauer von wenigstens etwa 4 min bei Raumtemperatur, besonders bevorzugt für die Dauer von wenigstens etwa 10 min durchgeführt, ganz besonders bevorzugt für die Dauer von wenigstens etwa 15 min. Eine Forcierung der Trocknung kann durch Temperaturerhöhung bei bis zu etwa 70°C erfolgen.

Die Aushärtung der Beschichtung kann sehr zuverlässig mittels einer UV-Trockeneinheit durchgeführt werden. Dabei hat es sich als zweckmäßig erwiesen, die UV-Strahlung mittels Hg-Mitteldrucklampen mit etwa 70 - 130 W/cm, besonders bevorzugt etwa 80 - 120 W/cm zu generieren. Die UV-Bestrahlungsstärke wird vorzugsweise auf etwa 4-7 J/cm², besonders bevorzugt auf etwa 5-6 J/ cm² festgelegt. Die Dauer einer Belichtung der Beschichtung mittels UV-Strahlung beträgt vorzugsweise etwa 10-40s, besonders bevorzugt etwa 20-30 s.

Als Klebstoff für die Verklebung wird zweckmäßigerweise ein 1-Komponenten-Klebstoff verwendet, welcher physikalisch härtend, viskos und in der Lage ist, die Klebeflächen aufzuweichen, damit ein optimaler Stoffschluss zwischen den Klebeflächen hergestellt wird.

Bevorzugt wird ein Klebstoff mit folgenden Kennwerten verwendet:

| Kennwert | Einheit | Bevorzugter Bereich, (besonders bevorzugter Kennwert), etwa |
|---|---|---|
| Inhaltsstoffe | | |
| Dichlormethan | % | 30 % - 60 % |
| Nitromethan | % | 15%-40% |
| 2-Phenoxyethanol | % | 5 % - 10 % |
| Ethanol | % | 1 % - 5 % |
| Siedebeginn | °C | 38 - 42 (40) |
| Dichte (20°C) | g/cm³ | 1,19 - 1,23 (1,21) |
| Wasserlöslichkeit (20°C) | g/l | 13,4 - 14,0 (13,7) |
| Viskosität (dynamisch, 20°C) | mPa | 700 - 1050 (750 - 1.000) |
| Standfestigkeit | s | 3 - 32 (5 - 30) |
| Zeit bis zur Weiterverarbeitung | h | > 2,5 (> 3) |

Als transparente Beschichtung für den Lichtleiter hat sich ein UV-härtender, anorganisch-organischer Hybridlack bewährt. Dieser weist vorzugsweise folgende Kennwerte bzw. Kennwertbereiche auf:

| Kennwert | Einheit | Bevorzugter Bereich (besonders bevorzugter Kennwert), etwa |
|---|---|---|
| Feststoffgehalt (DIN 53 216-A) | % | 28-32 (30) |
| Lieferviskosität (DIN 51 562, Teil 1, bei 20°C) | mm²/s | 4-11 (5-10) |
| Dichte (DIN 51 757, bei 20°C) | g/cm³ | 0,9-1,0 (0,95-0,96) |

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

### Es zeigen, jeweils schematisch

- Fig. 1: ein Kraftfahrzeug mit zwei erfindungsgemäßen Außenspiegeln,
- Fig. 2: eine Explosionsdarstellung eines erfindungsgemäßen Außenspiegels gemäß einer ersten Ausführungsform,
- Fig. 3: eine Explosionsdarstellung der Lichtleiteranordnung im Außenspiegel,
- Fig. 4: eine Schnittdarstellung gemäß Schnittverlauf IV aus Fig. 3, jedoch im montierten Zustand vom Lichtleiter,
- Fig. 5: eine Darstellung des Lichtleiters in Alleinstellung, in einer anderen, nicht von der Erfindung umfassten Ausführungsform der Beschichtung,
- Fig. 6: eine Darstellung vergleichbar mit derjenigen aus Fig. 4, noch in einer anderen, nicht von der Erfindung umfassten Ausführungsform des Lichtleiters,
- Fig. 7: eine Darstellung gemäß Ansicht VII aus Fig. 6 und
- Fig. 8: eine Darstellung vergleichbar mit Ansicht VII aus Fig. 6, jedoch noch in einer anderen, nicht von der Erfindung umfassten Ausführungsform des Lichtleiters.

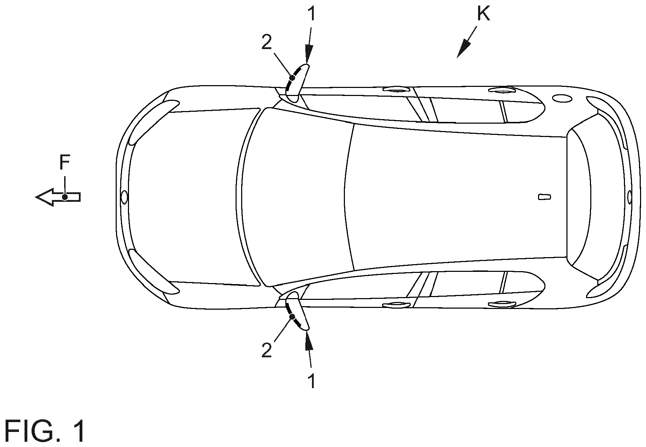

Fig. 1 zeigt ein Kraftfahrzeug K, welches mit zwei erfindungsgemäßen Außenspiegeln 1 ausgestattet ist. In jedem der Außenspiegel 1 wird ein Lichtleiter 2 eingesetzt, wie anhand der nachfolgenden Figuren noch näher erläutert wird. Mit F ist eine gewöhnliche Fahrtrichtung beziffert.

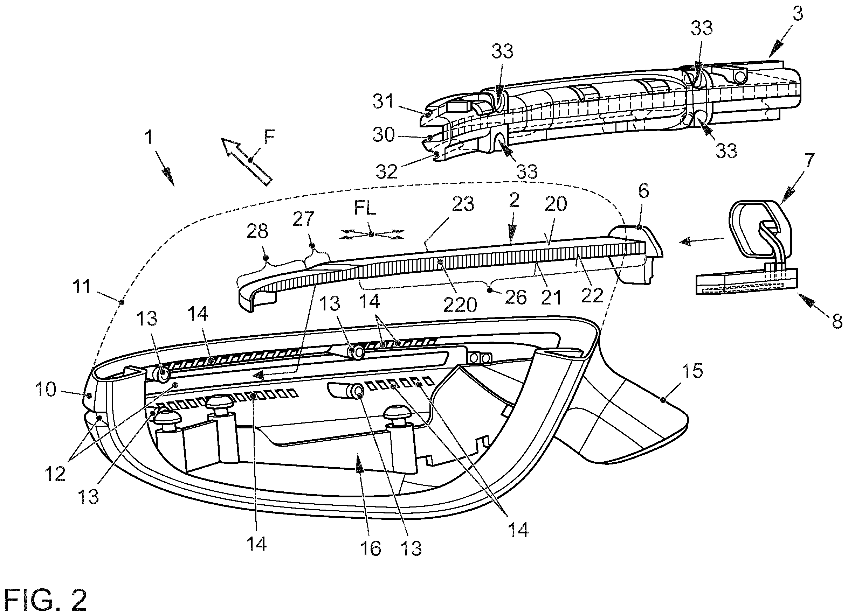

In der Fig. 2 ist eine Explosionsdarstellung des erfindungsgemäßen Außenspiegels 1 ersichtlich.

Der Außenspiegel 1 weist ein Gehäuse-Unterteil 10 und ein Gehäuse-Oberteil 11 (nur gestrichelt angedeutet) auf, die lösbar miteinander verbunden, beispielsweise verklipst sind. Im Innern des Außenspiegels 1 ist ein Aufnahmeraum 16 zur Aufnahme eines nicht näher dargestellten Spiegelglases mitsamt Bewegungsmechanik vorhanden. Der Außenspiegel 1 ist über einen Spiegelfuß 15 mit dem Kraftfahrzeug K in nicht näher dargestellter Weise verbindbar.

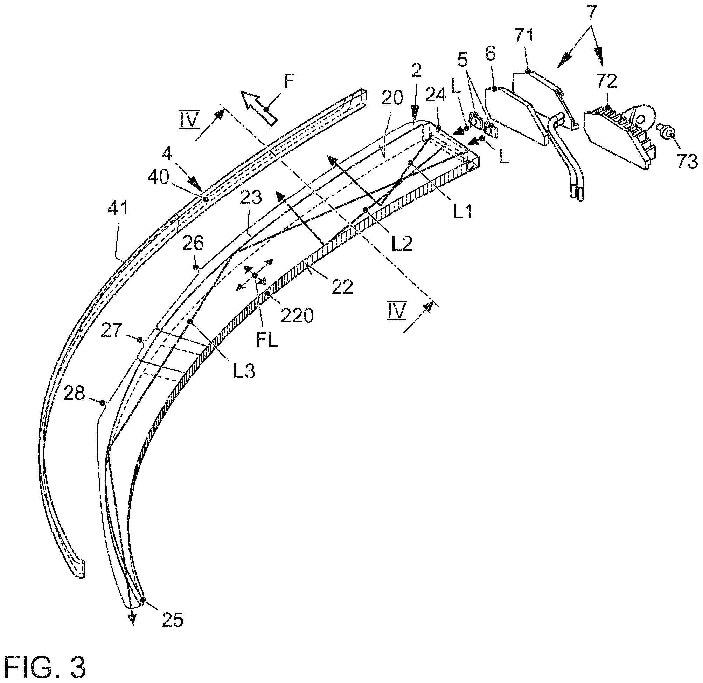

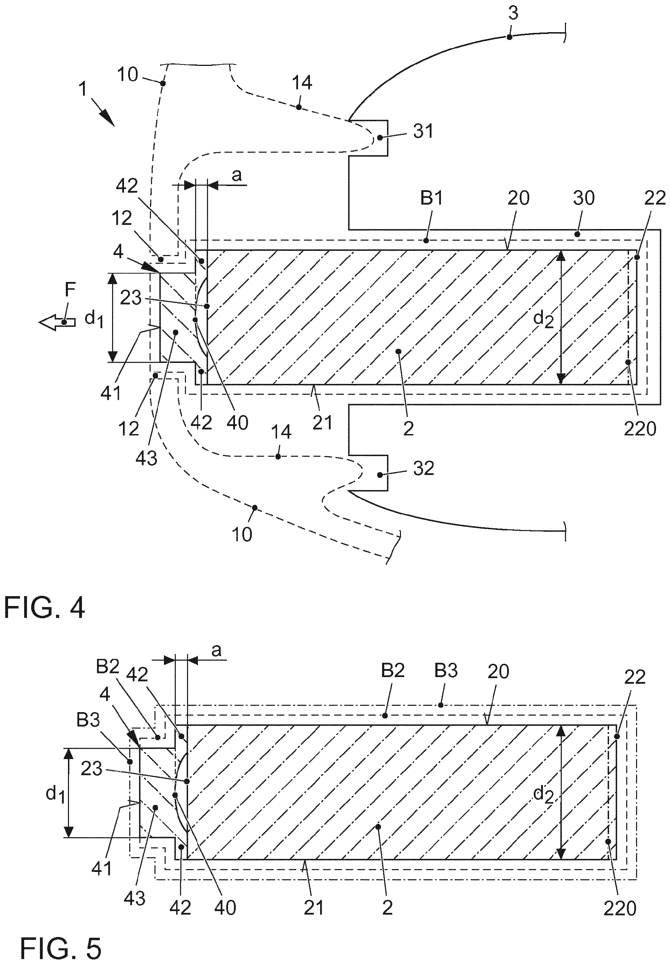

Wie anhand der Figur weiter ersichtlich wird, ist in das Gehäuse-Unterteil 10 eine längliche, schlitzartige Öffnung 12 eingebracht, welche in Montageposition des Außenspiegels 1 in etwa horizontal ausgerichtet ist und sich nahezu über die gesamte Länge des Außenspiegels 1 erstreckt. Das schlitzartige Aussehen der Öffnung 12 wird durch ein extremes Verhältnis von deren Länge zu deren Höhe bestimmt. Im Ausführungsbeispiel beträgt die Länge der Öffnung 12 in etwa 210 mm und deren Höhe in etwa nur 4 mm. Hierdurch ist somit ein Verhältnis "Länge zu Höhe" von etwa 52,5 gegeben. Die Öffnung 12 dient zur teilweisen Aufnahme des Lichtleiters 2 bzw. eines vorderen Abdeckelementes 4 (vgl. Fig. 3 und 4).

Ein rückseitiger, der Fahrtrichtung F abgewandter Bereich des Lichtleiters 2 wird in der Montageposition des Lichtleiters 2 von einer Längsnut 30 einer länglichen Halterung 3 aufgenommen. Die Länge der Halterung 3 entspricht in etwa der Länge des Lichtleiters 2.

Ferner sind im Gehäuse-Unterteil 10 noppenartige Vorsprünge 14 ersichtlich, welche oberhalb und unterhalb der Öffnung 12 in etwa parallel zu dieser entlang angeordnet sind.

In Montageposition des Lichtleiters 2 greifen die Vorsprünge 14 in einen oben liegenden Schlitz 31 beziehungsweise in einen unten liegenden Schlitz 32 ein (vgl. auch Fig. 4). Die Schlitze 31 und 32 sind als Längsschlitze ausgebildet und parallel zur Längsnut 30 ausgerichtet. Sowohl die Längsnut 30 als auch die Schlitze 31 und 32 erstrecken sich über die gesamte Länge der Halterung 3.

Zur Befestigung der Halterung 3 im Innern des Gehäuse-Unterteils 10 dienen Befestigungsöffnungen 33 der Halterung 3, welche mit Befestigungsdomen 13 des Gehäuse-Unterteils 10 zur Deckung gebracht werden. So kann eine Verschraubung zwischen der Halterung 3 und dem Gehäuse-Unterteil 10 erfolgen. Im verschraubten Zustand der Halterung 3 kann der Lichtleiter 2 zwischen der Halterung 3 und dem Gehäuse-Unterteil 10 somit sehr stabil und schwingungsarm gehalten werden.

In der Figur ist weiterhin eine Leiterplatte 6 ersichtlich, welche nicht näher dargestellte, lichtemittierenden Dioden (LEDs) trägt, wodurch Licht in den Lichtleiter 2 seitlich eingekoppelt werden kann.

Ferner sind eine Kühlung 7 und eine Leistungselektronik 8 vorhanden. Die Kühlung 7 dient zur Kühlung der Leiterplatte 6 und der Leistungselektronik 8.

Der Lichtleiter 2 hat im Umriss ein sensenartiges Aussehen (vgl. auch Fig. 3). Er weist eine hintere Seite 22, eine der Fahrtrichtung F zugewandte, vordere Seite 23, eine obere Seite 20 und eine untere Seite 21 auf. Die Seiten 20, 21 und 23 weisen bevorzugt jeweils eine ebene Oberfläche ohne einen Krümmungsradius auf, wobei die Seiten 20 und 21 parallel zu einander und senkrecht zu den Seiten 22 und 23 ausgerichtet sind. Auch die hintere Seite 22 weist eine Oberfläche ohne einen Krümmungsradius auf. Sie ist jedoch mit einer Streuoptik 220 versehen, die im Ausführungsbeispiel als Streifenoptik ausgebildet ist.

Wie aus Fig. 2 und Fig. 3 gut erkennbar wird, ist der Lichtleiter 2 als dünnes, flächiges Element ausgebildet mit einer Flächenerstreckung FL. Der Lichtleiter 2 ist in montierten Zustand mit seiner Flächenerstreckung FL in etwa horizontal ausgerichtet ist, wobei die Flächenerstreckung durch die Flächen der oberen und der unteren Seite 20 und 21 bestimmt wird.

Eine seitliche Seite 24 dient zur seitlichen Einkopplung von Licht zweier lichtemittierender Dioden (LEDs) 5, welche auf der Leiterplatte 6 befestigt sind. Vorzugsweise sind durch die LEDs 5 gelbes und/oder weißes Licht in den Lichtleiter 2 einkoppelbar. So sind beispielsweise die Lichtfunktionen eines Fahrtrichtungsanzeigers (Blinkers) und/oder eines Tagfahrlichts realisierbar. Hierzu können die LEDs 5 als sogenannte RGB-LEDs ausgebildet sein, mit denen Licht unterschiedlicher Farben erzeugbar ist.

Zur Kühlung der LEDs 5 ist die Leiterplatte 6 mit einem ersten Kühlkörper 71 und einem zweiten Kühlkörper 72 der Kühlung 7 verbindbar. Über eine Befestigungsschraube 73 kann eine zusätzliche Befestigung der Kühlung 7 im Gehäuse-Unterteil 10 erfolgen.

Der Lichtleiter 2 verjüngt sich, ausgehend von der Seite 24, stetig bis zu einem spitzen Ende 25. Hierdurch wird die Montierbarkeit des Lichtleiters 2 in der schlitzartigen Öffnung 12, vor allem in einem vom Spiegelfuß 15 abgewandten Bereich der Öffnung 12 erleichtert.

Konkret ist aus den Fig. 2 und 3 ersichtlich, dass der Lichtleiter 2 in Längsrichtung in drei Abschnitte 26, 27 und 28 unterteilbar ist. Der Abschnitt 26 nimmt in etwa 50 bis 70 Prozent der Längserstreckung des Lichtleiters 2 ein. Der darauffolgende Abschnitt 27 ist vergleichsweise kurz und nimmt als Übergang zum Abschnitt 28 nur etwa 5 bis 10 Prozent der Länge des Lichtleiters 2 ein. Schließlich folgt der Abschnitt 28, welcher in etwa 20 bis 30 Prozent der Länge des Lichtleiters 2 beansprucht und bis zum spitzen Ende 25 reicht. Der Lichtleiter 2 ist in seinem Abschnitt 26 am dicksten und weist dort vorzugsweise eine Dicke im Bereich von etwa 4 bis 8 Millimeter auf. Der Abschnitt 27 weist vorzugsweise in etwa eine Dicke von bevorzugt etwa 4 bis 7 Millimeter auf, während der Abschnitt 28 eine Dicke von bevorzugt nur noch etwa 3 bis 6 mm aufweist.

Wie beispielhaft anhand von Lichtstrahlen L1, L2 und L3 angedeutet ist, wird von den LEDs 5 in den Lichtleiter 2 eingekoppeltes Licht L durch die Streuoptik 220 der hinteren Seite 22 in Fahrtrichtung F ausgekoppelt (siehe L1, L2) und tritt aus dem Lichtleiter 2 über die als Lichtaustrittsfläche fungierende, vordere Seite 23 nach außen. Lichtstrahlen (siehe L3) können aber auch durch Totalreflexion bis zum spitzen Ende 25 des Lichtleiters 2 geleitet und dort entgegen der Fahrtrichtung F nach hinten unter einem bestimmten, ggf. vorgeschriebenen Abstrahlwinkel ausgestrahlt werden.

Auf die vordere Seite 23 des Lichtleiters 2 wird das als Lichtscheibe fungierende, bereits erwähnte Abdeckelement 4 aufgebracht, vorzugsweise aufgeklebt.

Das Abdeckelement 4 weist eine in Fahrtrichtung F weisende Vorderseite 41 auf, welche ebenfalls glatt ausgebildet ist. Demgegenüber ist eine Rückseite des Abdeckelementes 4 mit einer rinnenartigen Vertiefung 40 ausgebildet. Die rinnenartige Vertiefung 40 erstreckt sich über einen Großteil der Länge des Abdeckelementes 4, wobei deren Oberfläche eine Mattierung, also Aufrauhung aufweisen kann. Diese wurde vorzugsweise bereits werkzeugseitig beim Spritzgießprozess des Abdeckelementes 4 erzeugt.

Wie bereits erwähnt, sind sowohl der Lichtleiter 2 als auch das Abdeckelement 4 aus einer thermoplastischen Kunststoff-Formmasse, bevorzugt Polymethylmethacrylat (PMMA) im Spritzgussverfahren hergestellt sind. Besonders bevorzugt wird ein Material für den Lichtleiter 2 (im Folgenden Material 1) gewählt, welches ein sehr gutes Lichtstreuvermögen bei hoher Lichtdurchlässigkeit aufweist, mit folgenden Kennwerten:

| Kennwert | Einheit | bevorzugter Kennwert, etwa |
|---|---|---|
| Zug-Modul (1mm/min, ISO 527) | MPa | 3400 |
| Bruchspannung (5 mm/min, ISO 527) | MPa | 65 |
| Bruchdehnung (5mm/min, ISO 527) | % | 2,5 |
| Charpy Schlagzähigkeit (23°C, ISO 179/1eU) | kJ/m² | 17 |
| Vicat Erweichungstemperatur (B / 50, ISO 306) | °C | 105 |
| Glasübergangstemperatur (ISO 11357) | °C | 108 |
| Formbeständigkeitstemperatur (0,45 MPa, ISO 75) | °C | 101 |
| Formbeständigkeitstemperatur (1,8 MPa, ISO 75) | °C | 97 |
| Längenausdehnungskoeffizient (0-50°, ISO 11359) | E-5/°K | 6,3 |
| Schmelzvolumenrate MVR (230°C/3,8 Kg, ISO 1133) | cm³/10min | 4,1 |
| Transmissionsgrad (D65, ISO 13468-2) | % | 81 |
| Dichte | g/cm³ | 1,19 |

Als Material 1 mit den bevorzugten Eigenschaften wurde ein unter dem Markennamen PLEXIGLAS^{®} Satinice df23 7N erhältliches Material verwendet.

Das Abdeckelement 4 hingegen besteht aus einer Materialmischung, wobei zusätzlich zum Material 1 vorzugsweise noch ein weiteres Material (im Folgenden Material 2) zum Einsatz kommt, welches sehr gute mechanische Eigenschaften, hohe Wärmeformbeständigkeit, gute Fließfähigkeit und Schmelzeviskosität aufweist. Hier haben sich folgende Kennwerte als äußerst zweckmäßig erwiesen:

| Kennwert | Einheit | bevorzugter Kennwert, etwa |
|---|---|---|
| Zug-Modul (1mm/min, ISO 527) | MPa | 3200 |
| Bruchspannung (5 mm/min, ISO 527) | MPa | 73 |
| Bruchdehnung (5mm/min, ISO 527) | % | 3,5 |
| Charpy Schlagzähigkeit (23°C, ISO 179/1eU) | kJ/m² | 20 |
| Vicat Erweichungstemperatur (B / 50, ISO 306) | °C | 103 |
| Glasübergangstemperatur (ISO 11357) | °C | 110 |
| Formbeständigkeitstemperatur (0,45 MPa, ISO 75) | °C | 100 |
| Formbeständigkeitstemperatur (1,8 MPa, ISO 75) | °C | 95 |
| Längenausdehn ungskoeffizient (0-50°, ISO 11359) | E-5/° K | 8 |
| Schmelzvolumenrate MVR (230°C/3,8 Kg, ISO 1133) | cm³/10min | 6 |
| Transmissionsgrad (D65, ISO 13468-2) | % | 92 |
| Brechungszahl (589nm/23°C, ISO 489) | | 1,49 |
| Dichte | g/cm³ | 1,19 |

Als Material 2 mit den bevorzugten Eigenschaften wurde ein unter dem Markennamen PLEXIGLAS^{®} 7N erhältliches Material verwendet.

Als Mischungsverhältnis der beiden Materialien wird ein Mischungsverhältnis von etwa 75 % Material 1 zu etwa 25 % Material 2 besonders bevorzugt (also Material 1 : Material 2 entspricht etwa 3:1). Beide Materialien liegen vor der Verarbeitung als amorphe, thermoplastische Kunststoff-Formmasse, insbesondere als Gleichkorngranulat vor.

Anhand der Fig. 4 wird nun ein wesentliches Merkmal der Erfindung näher erläutert.

Im Montagezustand des Außenspiegels 1 ist das Abdeckelement 4 mit der vorderen Seite 23 des Lichtleiters 2 verbunden, vorzugsweise verklebt. Genauer gesagt, bildet das Abdeckelement 4 zwei Flansche 42 aus, an denen es mit der vorderen Seite 23 verbunden ist. Die Breite der Flansche 42 beträgt im Ausführungsbeispiel nur in etwa 0,3 mm. Es ist also bei der Verklebung des Abdeckelementes 4 mit der vorderen Seite 23 des Lichtleiters 2 die Gewährleistung einer hohen Maßhaltigkeit erforderlich.

Bevorzugt wird ein Klebstoff mit folgenden Kennwerten verwendet:

| Kennwert | Einheit | Bevorzugter Bereich, bevorzugter Kennwert, etwa |
|---|---|---|
| Inhaltsstoffe | | |
| Dichlormethan | % | 30 % - 60 % |
| Nitromethan | % | 15%-40% |
| 2-Phenoxyethanol | % | 5 % - 10 % |
| Ethanol | % | 1 % - 5 % |
| Siedebeginn | °C | 40 |
| Dichte (20°C) | g/cm³ | 1,21 |
| Wasserlöslichkeit (20°C) | g/l | 13,7 |
| Viskosität (dynamisch, 20°C) | mPa | 750 - 1.000 |
| Standfestigkeit | s | 5-30 |
| Zeit bis zur Weiterverarbeitung | h | > 3 |

Als Klebstoff mit den bevorzugten Eigenschaften wurde ein unter dem Markennamen ACRIFIX^{®} 1S 0106 erhältlicher Klebstoff verwendet.

Zwischen den Flanschen 42 ist die rinnenartige Vertiefung 40 ausgebildet. Es ist ersichtlich, dass durch die rinnenartige Vertiefung 40 zwischen der vorderen, als Lichtaustrittsfläche wirkenden Seite 23 des Lichtleiters 2 und der Innenseite des Abdeckelementes 4 ein Abstand a verbleibt. Der Abstand a beträgt vorzugsweise nur in etwa 0,1 bis etwa 0,3 Millimeter.

Ein von den Flanschen 42 des Abdeckelementes 4 abstehender Vorsprung 43 weist eine Dicke d1 von vorzugsweise in etwa 4 Millimeter auf und ist in der Öffnung 12 des Gehäuse-Unterteils 10 aufgenommen. Mit d2 ist eine Dicke des Lichtleiters 2 im dargestellten Querschnitt beziffert. Die Dicke d2 ist größer als die Dicke d1.

Sowohl der Lichtleiter 2 als auch das Abdeckelement 4 sind aus transparentem Kunststoff im Spritzgussverfahren hergestellt. Der transparente Kunststoff kann eingefärbt sein. Vorzugsweise ist der Kunststoff jedoch farblos ausgebildet.

Wesentlich ist nun, dass der Lichtleiter 2 nahezu vollständig mit einer Beschichtung B1 überzogen ist. Genauer gesagt, ist in diesem Ausführungsbeispiel die aus dem Abdeckelement 4 und dem Lichtleiter 2 gebildete Einheit vollständig mit der Beschichtung B1 versehen. Der Lichtleiter 2 ist daher nur nahezu vollständig (bis auf die Seite 23) mit der Beschichtung B1 versehen.

Durch die Beschichtung B1 wird der Lichtleiter 2 gut geschützt und es kann darauf verzichtet werden, den Lichtleiter 2 innerhalb des Außenspiegel-Gehäuses (10,11) mit einem zusätzlichen, raumfordernden Gehäuse zu umgeben.

Die Beschichtung B1 ist ebenfalls transparent, vorzugsweise farblos transparent ausgebildet. Bevorzugt ist die Beschichtung B1 als transparenter Lack ausgebildet.

Auf diese Weise wird es ermöglicht, dass die aus Lichtleiter 2 und Abdeckelement 4 bestehende Einheit zum einen optimal gegen Verschmutzung geschützt sind und zum anderen trotz der Beschichtung B1 überraschenderweise hervorragende Lichtwerte erzielt werden können. Insbesondere kann eine hohe Lichtausbeute erzielt werden, welche als das Verhältnis von ausgekoppeltem Licht zu eingekoppeltem Licht definiert wird.

Die Beschichtung B1 kann beispielsweise in einem Tauchverfahren aufgebracht werden, wobei also die zu beschichtende Einheit in das noch flüssige Beschichtungsmaterial für die Beschichtung B1 eingetaucht wird. Auch ein Besprühen der zu beschichtenden Einheit mit dem Beschichtungsmaterial ist denkbar.

Als transparente Beschichtung B1 für den Lichtleiter 2 hat sich ein UV-härtender, anorganisch-organischer Hybridlack bewährt. Dieser weist vorzugsweise folgende Kennwerte bzw. Kennwertbereiche auf:

| Kennwert | Einheit | Bevorzugter Bereich (besonders bevorzugter Kennwert), etwa |
|---|---|---|
| Feststoffgehalt (DIN 53 216-A) | % | 28-32 (30) |
| Lieferviskosität (DIN 51 562, Teil 1, bei 20°C) | mm²/s | 4-11 (5-10) |
| Dichte (DIN 51 757, bei 20°C) | g/cm³ | 0,9-1,0 (0,95-0,96) |

Als transparente Beschichtung mit den bevorzugten Eigenschaften wurde ein unter dem Markennamen ABRASIL^{®} FAP-30-MP1 erhältlicher Lack verwendet.

Als Verfahren zur Herstellung werden folgende Verfahrensschritte für die zu bearbeitenden Bauteile (Lichtleiter 2 und Abdeckelement 4) durchgeführt:
- Reinigung der zu fügenden Bauteile
- Auftragen des Klebstoffes auf Klebeflächen der zu fügenden Bauteile
- Fügen der Bauteile
- Aushärten der verklebten Bauteile für wenigstens etwa 10 Stunden bei Raumtemperatur
- Reinigung der aus den verklebten Bauteilen (Lichtleiter 2 und Abdeckelement 4) bestehenden Baueinheit
- Aufbringen der wenigstens einen Beschichtung B1 auf die aus Lichtleiter 2 und Abdeckelement 4 bestehenden Baueinheit mittels Sprühbeschichtung
- Lufttrocknung der Beschichtung B1 für die Dauer von wenigstens etwa 10 min
- Aushärtung

Vor Auftragen des Klebstoffs werden die zu fügenden Bauteile mittels eines trockenen Poliertuchs gereinigt. Bei starker Verschmutzung können diese auch mittels eines handelsüblichen Reinigungsbenzins gereinigt werden.

Das Fügen der Bauteile wird zweckmäßigerweise mittels einer geeigneten Klebelehre durchgeführt. Der zuvor in einer Spritze bereitgestellte Klebstoff kann dabei höchst vorteilhaft mittels einer Dosiernadel (bspw. 0,5", Ø 0,33 mm) auf die Klebeflächen aufgetragen werden. Die verklebten Bauteile können für die Aushärtung in der Kleblehre verbleiben.

Vor Aufbringung der wenigstens einen Beschichtung wird die aus den verklebten Bauteilen bestehende Baueinheit wiederum mittels eines trockenen Poliertuchs gereinigt. Bei starker Verschmutzung kann diese auch mittels eines handelsüblichen Reinigungsbenzins gereinigt werden.

Das Aufbringen der wenigstens einen Beschichtung B1 erfolgt vorzugsweise mittels einer geeigneten Spritzpistole, da dadurch eine sehr genaue Beschichtung/Lackierung möglich ist.

Die Aushärtung der Beschichtung B1 wird sehr effektiv mittels einer UV-Trockeneinheit durchgeführt. Dabei hat es sich als zweckmäßig erwiesen, die UV-Strahlung mittels Hg-Mitteldrucklampen mit etwa 80 - 120 W/cm zu generieren. Die UV-Bestrahlungsstärke wird vorzugsweise auf etwa 5-6 J/ cm² festgelegt. Die Dauer einer Belichtung der Beschichtung mittels UV-Strahlung beträgt bevorzugt etwa 20-30 s.

In Figur 5 ist nun ein nicht zur Erfindung gehörendes Ausführungsbeispiel dargestellt, welches sich in einer anderen Beschichtung des Lichtleiters 2 niederschlägt. Der Einfachheit sind nur der Lichtleiter 2 mitsamt Abdeckelement 4 dargestellt.

Konkret ist hierbei die aus dem Lichtleiter 2 und dem Abdeckelement 4 gebildete Einheit zunächst mit einer metallischen Beschichtung B2 überzogen, wobei vor Beschichten der Einheit die Vorderseite 41 des Abdeckelementes 4 maskiert bzw. abgedeckt wurde. Die metallische Beschichtung B2 kann bevorzugt eine Goldbeschichtung oder auch eine Aluminiumbeschichtung sein. Hierdurch kann in den Lichtleiter eingekoppeltes Licht ebenso mit geringen Verlusten im Lichtleiter reflektiert und unter einer hohen Lichtausbeute wieder ausgekoppelt werden.

Bevorzugt kann eine solche metallische Beschichtung B2 durch ein PVD-Verfahren (Physical Vapor Deposition) aufgedampft werden, welches das Aufbringen von Schichten im Vakuum ermöglicht. Hierzu zählt unter anderem auch das sogenannte Sputtern. Allerdings sind die aufbringbaren Schichten extrem dünn und liegen im Nanometer- bzw. Mikrometerbereich.

Es wird daher bei diesem Ausführungsbeispiel wenigstens noch eine weitere Beschichtung B3, bevorzugt über die gesamte Einheit aus Lichtleiter 2 und Abdeckelement 4 aufgebracht. Die Beschichtung B3 kann bevorzugt eine silikonhaltige oder auch eine transparente Beschichtung sein. Im Fall einer transparenten Beschichtung ist bevorzugt wiederum ein transparenter Lack zu wählen. Die Aufbringung erfolgt vorzugsweise analog zur Aufbringung der Beschichtung B1.

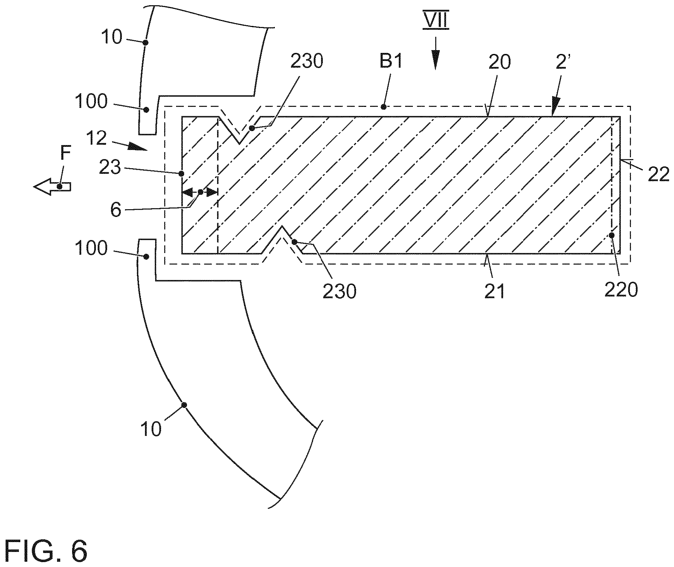

Anhand der Figur 6 soll nun noch ein weiteres, nicht von der Erfindung umfasstes Ausführungsbeispiel erläutert werden. Hierbei ist ein Lichtleiter 2' vorgesehen, der im Unterschied zum Lichtleiter 2 an der oberen und der unteren Seite 20 und 21 mit Störstellen 230 versehen ist. Die Störstellen 230 sind mindestens in einem bestimmten Abstand b von der vorderen Seite 23 in den Lichtleiter 2' eingebracht. Somit kann die vordere Seite 23 unversehrt verbleiben. Zudem erstrecken sich die Störstellen 230 im Wesentlichen über die gesamte Länge des Lichtleiters 2'. Die Störstellen 230 können beispielsweise pyramidenartig ausgebildet sind. Sie wurden bei der Herstellung des aus Kunststoff bestehenden Lichtleiters 2' im Spritzgussverfahren über entsprechende, pyramidenartige Vorsprünge der Werkzeughälften erzeugt. Beim anschließenden Beschichten mit einer transparenten Beschichtung B1 (vorzugsweise ein transparenter Lack) werden die Störstellen 230 auch mit der Beschichtung B1 überzogen.

Bei diesem Ausführungsbeispiel wurde auf ein die vordere Seite 23 abdeckendes Abdeckelement verzichtet. Daher ist der Lichtleiter 2' selbst mit einem vorderen Bereich in der Öffnung 12 aufgenommen und gegen Absätze 100 des Außenspiegel-Gehäuses 10 abgestützt.

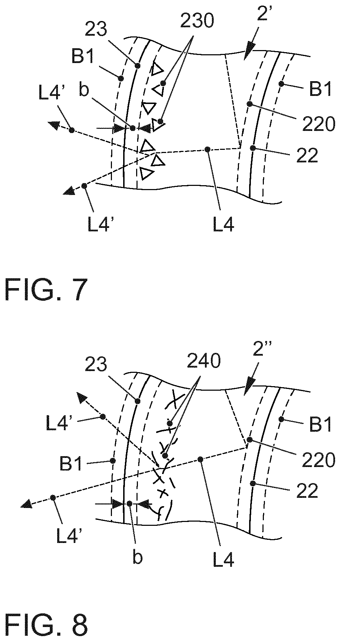

In der ebenfalls nicht zur Erfindung gehörenden Figur 7 ist lediglich zur Veranschaulichung angedeutet, dass durch die Störstellen 230 ein an der Streuoptik 220 reflektierter Lichtstrahl L4 nochmals gebrochen und gestreut wird (L4').

Figur 8 zeigt noch eine andere, nicht von der Erfindung umfasste Ausbildung, bei der ein Lichtleiter 2" im Unterschied zum Lichtleiter 2' mit Störstellen 240 versehen ist, welche durch Einwirkung eines Lasers (nicht dargestellt) in einem dreidimensionalen Verfahren erzeugt wurden. Die Störstellen 240 sind im Ausführungsbeispiel als strichartige Objekte in den Lichtleiter 2" hineingebracht und befinden sich unter seiner Oberfläche. Auch andere Objektformen sind denkbar. Auch hier weisen die Störstellen einen Abstand b zur vorderen Seite 23 auf und erstrecken sich entlang der Länge des Lichtleiters 2". Beispielhaft ist wiederum ein Lichtstrahl L4 dargestellt, welcher zunächst an der hinteren Streuoptik 220 reflektiert und an den Störstellen 240 nochmals gebrochen und gestreut wird (L4'). Auch der Lichtleiter 2" ist nach der Laserbearbeitung von einer transparenten Beschichtung B1 überzogen worden.

Abweichend davon ist auch denkbar, die Lichtleiter 2' und 2" zunächst mit einer metallischen Beschichtung und dann nochmals mit wenigstens einer weiteren, vorzugsweise transparenten Beschichtung zu versehen.

### Bezugszeichenliste

- 1: Außenspiegel
- 2, 2', 2": Lichtleiter
- 3: Halterung
- 4: Abdeckelement
- 5: Lichtemittierende Dioden (LEDs)
- 6: Leiterplatte
- 7: Kühlung
- 8: Leistungselektronik
- 10: Gehäuse-Unterteil
- 11: Gehäuse-Oberteil
- 12: Öffnung
- 13: Befestigungsdome
- 14: Vorsprünge
- 15: Spiegelfuß
- 16: Aufnahmeraum
- 20: obere Seiten des Lichtleiters
- 21: untere Seiten des Lichtleiters
- 22: hintere Seiten des Lichtleiters
- 23: vordere Seiten des Lichtleiters
- 24: seitliche Seiten
- 25: spitze Enden
- 26: Abschnitt des Lichtleiters
- 27: Abschnitt des Lichtleiters
- 28: Abschnitt des Lichtleiters
- 30: Längsnut
- 31: obenliegender Schlitz
- 32: untenliegender Schlitz
- 33: Befestigungsöffnungen
- 40: rinnenartige Vertiefung
- 41: Vorderseite
- 42: Flansch
- 43: Vorsprung
- 71: erster Kühlkörper
- 72: zweiter Kühlkörper
- 73: Befestigungsschraube
- 100: Absätze
- 220: Streuoptik
- 230: Störstellen
- 240: Störstellen

- a: Abstand
- b: Abstand
- B1: transparente Beschichtung
- B2: metallische Beschichtung
- B3: Beschichtung
- d1: Dicke des Vorsprungs vom Abdeckelement
- d2: Dicke des Lichtleiters
- F: Fahrtrichtung
- FL: Flächenerstreckung
- K: Kraftfahrzeug
- L: Licht
- L1-L4, L4': Lichtstrahlen

## Patentansprüche

1. Außenspiegel (1) für ein Kraftfahrzeug (K), mit wenigstens einem Lichtleiter (2,2',2"), in den das Licht wenigstens einer Lichtquelle (5) einkoppelbar und zur Realisierung wenigstens einer Lichtfunktion über wenigstens eine als Lichtaustrittsfläche wirkende, vordere Seite (23) des Lichtleiters wieder auskoppelbar ist, wobei das Licht durch wenigstens eine Öffnung (12) eines Außenspiegel-Gehäuses (10,11) aus dem Außenspiegel (1) nach außen treten kann, wobei die als Lichtaustrittsfläche wirkende, vordere Seite (23) des Lichtleiters (2) mit einem transparenten Abdeckelement (4) abgedeckt ist und zwischen der als Lichtaustrittsfläche wirkenden, vorderen Seite (23) des Lichtleiters (2) und dem Abdeckelement (4) zumindest bereichsweise ein Abstand (a) ausgebildet ist, **dadurch gekennzeichnet, dass** der Lichtleiter (2) nahezu vollständig mit wenigstens einer Beschichtung (B1; B2, B3) überzogen ist, wobei das Abdeckelement (4) mit der vorderen Seite (23) des Lichtleiters (2) verbunden ist und somit eine Einheit mit dem Lichtleiter (2) bildet, welche vollständig mit der Beschichtung (B1) versehen ist, wobei die Beschichtung (B1) transparent ist.

2. Außenspiegel (1) nach Anspruch 1, **dadurch gekennzeichnet, dass** die Beschichtung (B1) ein transparenter Lack ist.

3. Außenspiegel (1) nach einem der vorhergehenden Ansprüche, **dadurch gekennzeichnet, dass** der Lichtleiter (2) mit einer Flächenerstreckung (FL) plattenartig und im Umriss sensenartig ausgebildet ist, mit einer vorderen, einer Fahrtrichtung (F) zugewandten Seite (23), einer hinteren, der Fahrtrichtung (F) abgewandten Seite (22), einer oberen Seite (20) und einer unteren Seite (21).

4. Außenspiegel (1) nach einem der vorhergehenden Ansprüche, **dadurch gekennzeichnet, dass** eine Oberfläche (40) des Abdeckelementes (4), welche der als Lichtaustrittsfläche wirkenden Seite (23) des Lichtleiters (2) zugewandt ist, zumindest bereichsweise mattiert ist.

5. Außenspiegel (1) nach einem der vorhergehenden Ansprüche, **dadurch gekennzeichnet, dass** eine hintere, einer Fahrtrichtung (F) abgewandte Seite (22) des Lichtleiters (2) mit einer Streuoptik (220) versehen ist.

6. Außenspiegel (1) nach einem der vorhergehenden Ansprüche, **dadurch gekennzeichnet, dass** in einem Abstand (b) von der vorderen Seite (23) lichtlenkende Störstellen (230, 240) in den Lichtleiter (2) eingebracht sind.

7. Außenspiegel (1) nach einem der vorhergehenden Ansprüche, **dadurch gekennzeichnet, dass** die Öffnung (12) des Außenspiegel-Gehäuses (10,11) schlitzartig ausgebildet ist, wobei die Flächenerstreckung (FL) des Lichtleiters (2) in Montageposition in etwa horizontal ausgerichtet ist und der Lichtleiter (2) vorderseitig oder mit einem Vorsprung (43) des Abdeckelementes (4) in der Öffnung (12) aufgenommen ist.

8. Außenspiegel (1) nach Anspruch 7, **dadurch gekennzeichnet, dass** der Lichtleiter (2) rückseitig von einer Längsnut (30) einer länglichen Halterung (3) teilweise aufgenommen ist und im Außenspiegel-Gehäuse (10) horizontal ausgerichtete Vorsprünge (14) angeordnet sind, welche in ober- und unterhalb der Längsnut (30) befindliche Schlitze (31,32) eingreifen.

9. Außenspiegel (1) nach Anspruch 2, **dadurch gekennzeichnet, dass** die Beschichtung (B1) als farblos transparenter Lack ausgebildet ist.

10. Kraftfahrzeug (K) mit wenigstens einem Außenspiegel (1) nach einem der vorhergehenden Ansprüche.

## Claims

1. Exterior mirror (1) for a motor vehicle (K), having at least one light guide (2, 2', 2") into which the light from at least one light source (5) is able to be incoupled and, for realizing at least one light function, outcoupled again via at least one front side (23) of the light guide acting as a light outcoupling surface, wherein the light can emerge from the exterior mirror (1) to the outside through at least one opening (12) of an exterior mirror housing (10, 11), wherein the front side (23) of the light guide (2) acting as a light outcoupling surface is covered by a transparent cover element (4) and a distance (a) is formed at least regionally between the front side (23) of the light guide (2) acting as a light outcoupling surface and the cover element (4), **characterized in that** the light guide (2) is nearly completely coated with at least one coating (B1; B2; B3), wherein the cover element (4) is connected to the front side (23) of the light guide (2) and thus forms a unit with the light guide (2) that is entirely provided with the coating (B1), wherein the coating (B1) is transparent.

2. Exterior mirror (1) according to Claim 1, **characterized in that** the coating (B1) is a transparent lacquer.

3. Exterior mirror (1) according to either of the preceding claims, **characterized in that** the light guide (2) is embodied with a surface extent (FL) in the manner of a plate and an outline in the manner of a scythe, having a front side (23) facing a driving direction (F), a rear side (22) facing away from the driving direction (F), an upper side (20) and a lower side (21).

4. Exterior mirror (1) according to one of the preceding claims, **characterized in that** a surface (40) of the cover element (4) facing the side (23) of the light guide (2) acting as a light outcoupling surface at least regionally has a matte finish.

5. Exterior mirror (1) according to one of the preceding claims, **characterized in that** a rear side (22) of the light guide (2) facing away from a driving direction (F) is provided with a diffusing optical unit (220) .

6. Exterior mirror (1) according to one of the preceding claims, **characterized in that** light-steering defects (230, 240) are introduced into the light guide (2) at a distance (b) from the front side (23).

7. Exterior mirror (1) according to one of the preceding claims, **characterized in that** the opening (12) of the exterior mirror housing (10, 11) is embodied in the manner of a slot, wherein the surface extent (FL) of the light guide (2) in the mounted position is aligned approximately horizontally and the light guide (2) is held at the front side or with a projection (43) of the cover element (4) in the opening (12).

8. Exterior mirror (1) according to Claim 7, **characterized in that** the light guide (2) is partially held at the rear side by a longitudinal groove (30) of an elongate holder (3) and horizontally aligned projections (14) are arranged in the exterior mirror housing (10), which engage in slots (31, 32) located above and below the longitudinal groove (30).

9. Exterior mirror (1) according to Claim 2, **characterized in that** the coating (B1) is embodied in the form of a colourlessly transparent lacquer.

10. Motor vehicle (K) having at least one exterior mirror (1) according to one of the preceding claims.

## Revendications

1. Rétroviseur extérieur (1) pour un véhicule automobile (K), comprenant au moins un guide de lumière (2, 2', 2") dans lequel la lumière d'au moins une source de lumière (5) peut être injectée et peut être à nouveau extraite par au moins une face avant (23) du guide de lumière, servant de surface de sortie de lumière, pour réaliser au moins une fonction d'éclairage, la lumière pouvant sortir par au moins une ouverture (12) d'un boîtier de rétroviseur extérieur (10, 11) du rétroviseur extérieur (1) vers l'extérieur, la face avant (23) du guide de lumière (2), servant de surface de sortie de lumière, étant recouverte d'un élément de recouvrement transparent (4), et un écartement (a) étant réalisé au moins par endroits entre la face avant (23) du guide de lumière (2), servant de surface de sortie de lumière, et l'élément de recouvrement (4),
**caractérisé en ce que** le guide de lumière (2) est recouvert presque entièrement d'un revêtement (B1 ; B2, B3), l'élément de recouvrement (4) étant relié à la face avant (23) du guide de lumière (2) et constituant ainsi une unité avec le guide de lumière (2) qui est munie entièrement du revêtement (B1), le revêtement (B1) étant transparent.

2. Rétroviseur extérieur (1) selon la revendication 1, **caractérisé en ce que** le revêtement (B1) est un vernis transparent.

3. Rétroviseur extérieur (1) selon l'une quelconque des revendications précédentes, **caractérisé en ce que** le guide de lumière (2) est réalisé avec une étendue superficielle (FL) en forme de plaque et un contour en forme de faux en, avec une face avant (23) tournée vers un sens de la marche (F), une face arrière (22) détournée du sens de la marche (F), une face supérieure (20) et une face inférieure (21).

4. Rétroviseur extérieur (1) selon l'une quelconque des revendications précédentes, **caractérisé en ce qu'**une surface (40) de l'élément de recouvrement (4), qui est tournée vers la face (23) du guide de lumière (2), servant de surface de sortie de lumière, est dépolie au moins par endroits.

5. Rétroviseur extérieur (1) selon l'une quelconque des revendications précédentes, **caractérisé en ce qu'**une face arrière (22) du guide de lumière (2), détournée d'un sens de la marche (F), est munie d'une optique de diffusion (220).

6. Rétroviseur extérieur (1) selon l'une quelconque des revendications précédentes, **caractérisé en ce que** à une distance (b) de la face avant (23), des irrégularités (230, 240) de guidage de lumière sont introduites dans le guide de lumière (2).

7. Rétroviseur extérieur (1) selon l'une quelconque des revendications précédentes, **caractérisé en ce que** l'ouverture (12) du boîtier de rétroviseur extérieur (10, 11) est réalisée en forme de fente, l'étendue superficielle (FL) du guide de lumière (2) dans la position de montage étant orientée de manière approximativement horizontale et le guide de lumière (2) étant reçu sur la face avant ou avec une saillie (43) de l'élément de recouvrement (4) dans l'ouverture (12) .

8. Rétroviseur extérieur (1) selon la revendication 7, **caractérisé en ce que** le guide de lumière (2) est reçu partiellement sur la face arrière par une rainure longitudinale (30) d'un support allongé (3), et dans le boîtier de rétroviseur extérieur (10) sont disposées des saillies (14) orientées horizontalement qui viennent en prise dans des fentes (31, 32) se trouvant au-dessus et au-dessous de la rainure longitudinale (30) .

9. Rétroviseur extérieur (1) selon la revendication 2, **caractérisé en ce que** le revêtement (B1) est réalisé sous forme de vernis transparent incolore.

10. Véhicule automobile (K) comprenant au moins un rétroviseur extérieur (1) selon l'une quelconque des revendications précédentes.
